## Europäisches Patentamt

## European Patent Office

## Office européen des brevets

(19)

(11) Numéro de publication: **0 153 227**

**B1**

(12)

# FASCICULE DE BREVET EUROPÉEN

(45) Date de publication du fascicule du brevet:
12.10.88

(51) Int. Cl.⁴: **C 01 F 17/00**

(21) Numéro de dépôt: **85400216.9**

(22) Date de dépôt: **11.02.85**

(54) **Oxyde cérique à nouvelles caractéristiques morphologiques et son procédé d'obtention.**

(30) Priorité: **20.02.84 FR 8402506**

(43) Date de publication de la demande:
**28.08.85 Bulletin 85/35**

(45) Mention de la délivrance du brevet:
**12.10.88 Bulletin 88/41**

(84) Etats contractants désignés:
**AT BE CH DE FR GB IT LI LU NL SE**

(56) Documents cité:
**FR-A-859 854**
**SU-A-833 525**
**US-A-2 327 992**

**CHEMICAL ABSTRACTS, vol. 95, no. 22, novembre 1981, résumé no. 189463d, page 134, Columbus, Ohio, US; & SU - A - 833 525 (INSTITUTE OF GENERAL AND INORGANIC CHEMISTRY, ACADEMY OF SCIENCES, BELORUSSIAN S.S.R.) 30-05-1981**

(73) Titulaire: **RHONE- POULENC CHIMIE, 25, quai Paul Doumer, F-92408 Courbevoie Cédex (FR)**

(72) Inventeur: **Chane- Ching, Jean- Yves, 6, rue Vauvenargues, F-75018 Paris (FR)**
Inventeur: **Dumousseau, Jean- Yves, 60, rue des Dames, F-75017 Paris (FR)**

(74) Mandataire: **Dutruc- Rosset, Marie- Claude, RHONE- POULENC INTERSERVICES Service Brevets Chimie 25, Quai Paul Doumer, F-92408 Courbevoie Cédex (FR)**

**0 153 227**

## Description

La présente invention a pour objet un oxyde cérique à nouvelles caractéristiques morphologiques. Elle concerne également le procédé d'obtention dudit oxyde cérique.

Dans l'exposé qui suit de l'invention, on entend par surface spécifique, la surface spécifique B.E.T. déterminée selon la méthode BRUNAUER - EMMETT - TELLER, décrite dans le périodique "The Journal of American Society 1938, 60, 309".

L'oxyde cérique seul ou en mélange avec d'autres oxydes métalliques est utilisé comme catalyseurs pour la synthèse notamment du méthanol [C.R. Séances Acad. Sci. ser. 2. 292 (12), 883-5 (1981)] ou dans des procédés de traitement des gaz résiduaires (demande de brevet japonaise n° 76/62 616).

Pour avoir une bonne réactivité catalytique, il est souhaitable de disposer d'un oxyde cérique ayant la plus grande surface spécifique possible.

Or jusqu à présent, la plupart des procédés d'obtention d'oxyde cérique ne permettent pas d'atteindre ce résultat.

On connait par exemple, selon l'article de S. HORSLEY, J.M. TOWNER, M.B. WALDRON [Tirages Prelim. Symp. Eur. Metall. Poudres, 4 th. 1, paper 12, (1975)] un procédé de préparation d'oxyde de cérium IV par décomposition thermique de l'oxalate de cérium III. Le traitement thermique effectué à 450°C conduit à l'obtention d'un oxyde cérique n'ayant une surface spécifique que de 69 m$^2$/g.

On peut également citer l'article de R. Sh. MIKHAIL, R.M. GABR et R.B. FAHIN [J. Appl. Chem. 20, 7, 222-225 (1970)] qui s'intéressant à la structure de l'oxyde cérique ont étudié les caractéristiques de l'oxyde cérique préparé par calcination de l'hydroxyde cérique obtenu par traitement d'une solution de nitrate céreux par l'ammoniaque en présence d'eau oxygénée. On remarque cependant que l'oxyde cérique obtenu par calcination à 400°C présente une surface spécifique seulement de 80 m$^2$/g.

On peut également mentionner le brevet russe 833 525 qui décrit un oxyde cérique ayant une surface spécifique de 94 m$^2$/g après calcination à 400°C et 72 m$^2$/g après calcination à 600°C. Ledit oxyde est obtenu selon un procédé qui consiste à précipiter un hydroxyde de cérium à partir d'une solution de sel de cérium, à laver jusqu'à obtention d'un sol, à y ajouter du polyacrylamide, à séparer le précipité obtenu et à le calciner entre 400 et 700°C.

Enfin, on a décrit dans le brevet américain US-A-2 327 992 un procédé de préparation de composés de cérium pur à partir d'un mélange d'hydroxydes trivalents de terres cériques qui consiste à oxyder le cérium en cérium IV, puis à effectuer un traitement par un acide faible ou dilué qui dissout les éléments trivalents seuls tandis que la presque totalité du cérium reste dans l'insoluble à l'état cérique. Le concentré cérique est séparé par filtration et lavage. Il est dissout dans l'acide nitrique, puis la solution est hydrolysée par l'eau bouillante, en présence d'une petite quantité d'acide sulfurique. Le précipité est séparé, lavé à l'eau, éventuellement calciné.

Ledit brevet ne décrit pas l'obtention d'oxyde cérique de grande surface spécifique, mais la préparation de composés de cérium pur, essentiellement un hydroxyde de cérium.

La présente invention a précisément pour but de fournir un procédé de préparation d'un oxyde cérique présentant une grande surface spécifique déterminée selon la méthode BET, c'est-à-dire au moins ègale à 85 ± 5 m$^2$/g.

Un autre objet de l'invention est, à titre de produits industriels nouveaux, un oxyde cérique présentant une surface spéifique déterminée selon la méthode BET d'au moins 100 mm$^2$ après caleination à une temperature comprise entre 400 et 450°C et, de préférence, de 100 à 130 m$^2$/g après caleination à une température comprise entre 400°C et 450°C.

Une autre caractéristique de l'oxyde cérique selon l'invention est qu'il présente une faible évolution de la surface spécifique lorsqu'il est soumis à une élévation de température.

C'est ainsi que sa surface spécifique décroit au plus de 30 m$^2$/g environ lorsqu'il est soumis à une hausse de température de 400°C à 600°C.

Enfin, une autre caractéristique de l'oxyde cérique selon l'invention est qu'il présente une répartition granulomètrique fine et resserrée.

Il possède des dimensions d'agrégats allant de 0,2 à 2,0 µm. La méthode de mesure granulomètrique étant basée sur une variation de l'adsorption aux rayons X provoquée par la sédimentation des particules par gravité.

Généralement, la taille des agrégats exprimée par le diamètre moyen ($d_{50}$) varie de 0,5 à 1,5 µm, de préférence de 0,9 à 1,1 µm. On définit le diamètre moyen comme étant un diamètre tel que 50 % en poids des agrégats ont un diamètre supérieur ou inférieur au diamètre moyen.

Les écarts-types $e_1$ et $e_2$ qui sont définis par les rapports $\frac{d_{84}}{d_{50}}$ et $\frac{d_{50}}{d_{16}}$ sont compris dans un intervalle allant de 1,0 à 2,5.

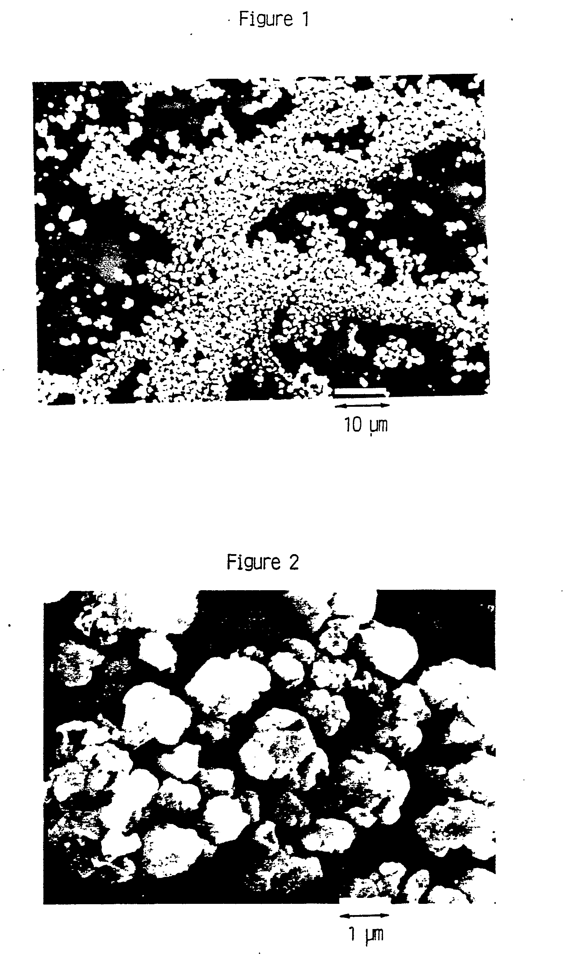

Les figures 1 et 2 représentent des photographies prises au microscope électronique à balayage (à deux grossissements différents G = 1 200 et G = 12 000) qui montrent la morphologie du type billes de l'oxyde cérique obtenu selon l'invention. On observe également une répartition granulométrique uniforme du produit obtenu.

L'invention a également pour objet un procédé d'obtention d'oxyde cérique présentant une surface spécifique déterminée selon la méthode BET d'au moins 85 ± 5 m$^2$/g caractérisé par le fait qu'il consiste à hydrolyser une solution aqueuse d'un sel de cérium IV en milieu acide, à filtrer le précipité obtenu, à le laver à l'aide d'un solvant organique, éventuellement à le sécher, puis à le calciner à une température comprise entre 300 et 600°C.

Dans la première étape du procédé de l'invention, on réalise la préparation de l'hydrate d'oxyde cérique: $CeO_2, 2 H_2O$.

A cet effet, on part d'une solution de cérium IV qui peut être une solution aqueuse de nitrate cérique ou une solution aqueuse de nitrate cérique d'ammonium. Ladite solution peut contenir sans inconvénient du cérium à l'état céreux mais il est souhaitable pour avoir un bon rendement de précipitation qu'elle contienne au moins 85 % de cérium IV.

Le sel de cérium est choisi de telle sorte qu'il ne contienne pas d'impuretés qui puissent se retrouver dans le produit final, après calcination. Il peut être avantageux de mettre en jeu un sel de cérium présentant un degré de pureté supérieure à 99 %.

La concentration de la solution de sel de cérium n'est pas un facteur critique, selon l'invention. Lorsqu'elle est exprimée en cérium IV, elle peut varier entre 0,3 et 2 moles par litre.

Le milieu d'hydrolyse est constitué par de l'eau qui est, de préférence, de l'eau distillée ou permutée.

L'hydrolyse est réalisée en milieu acide. L'acidité peut être apportée par le début de la réaction d'hydrolyse car la formation d'une mole d'hydrate d'oxyde cérique, est accompagnée par la libération de 4 protons.

L'acidité peut être apportée par ajout d'un acide minéral. D'une manière préférentielle, on choisit l'acide nitrique. On peut utiliser un acide qui peut être concentré ou dilué, par exemple, jusqu'à $10^{-2}$ N.

Elle peut également provenir de la solution de nitrate cérique qui peut être légèrement acide et avoir une normalité variant entre 0,3 N et 5 N de préférence entre 0,3 N et 1 N.

Le milieu d'hydrolyse peut présenter une acidité allant de $10^{-2}$N jusqu'à 1,0 N.

La proportion entre la solution aqueuse de sel de cérium IV et le milieu d'hydrolyse (essentiellement l'eau) est telle que la concentration finale équivalente en cérium IV est comprise entre 0,2 et 0,8 mole/litre.

On définit la concentration finale équivalente en cérium IV par l'équation suivante:

$$[Ce^{IV} \text{ éq.}] = \frac{[Ce^{IV}] \times V'}{V + V'}$$

dans laquelle:
- $[Ce^{IV}]$ est la concentration en moles/litre de la solution de sel de cérium IV
- V représente le volume d'eau éventuellement additionné d'acide
- V' représente le volume de la solution de cérium IV.

L'hydrolyse du sel de cérium IV réalisée dans les conditions telles que décrites précédemment est effectuée d'une manière préférentielle entre 70°C et jusqu'à la température de reflux du milieu réactionnel qui se situe vers 100°C.

Il est plus aisé de travailler à la température de reflux qui est facile à contrôler et à reproduire.

Selon un mode de réalisation pratique de l'invention, on commence à chauffer l'eau contenant éventuellement de l'acide jusqu'à obtention de la température désirée choisie dans la zone prédéfinie.

On introduit alors, graduellement ou en continu la solution de sel de cérium IV: la durée d'addition de solution de sel de cérium IV est généralement comprise entre 1 heure et 4 heures. On se référera aux exemples pour l'illustration des débits d'addition de la solution de sel de cérium IV.

Après la fin de l'addition de ladite solution, on poursuit le chauffage jusqu'à précipitation complète du cérium IV sous la forme de son hydrate. Cette durée peut varier dans de très larges limites de 1 à 24 heures mais généralement, de 2 à 8 heures supplémentaires de chauffage suffisent.

La deuxième étape du procédé consiste à filtrer après réaction la masse réactionnelle qui se présente sous la forme d'une suspension dont la température se situe entre 90°C et 100°C. Cette opération est effectuée avant ou après reftroidissement de la masse réactionnelle à température ambiante c'est-à-dire entre 10°C et 25°C.

Selon le procédé de l'invention, on lave le gâteau de filtration afin d'éliminer les anions du sel de Ce IV de départ (nitrate par exemple) adsorbés sur le précipité.

Le lavage est opéré à l'aide d'un solvant organique. On peut faire appel aux hydrocarbures aliphatiques, cycloaliphatiques ou aromatiques ou à des alcools aliphatiques ou cycloaliphatiques tels que le méthanol, l'étanol, le n-propanol, l'isopropanol, le n-butanol, l'isobutanol, le néobutanol.

On effectue de un à plusieurs lavages et le plus souvent de un à trois lavages.

Après ce lavage, la teneur en eau du gâteau est comprise entre 20 et 80 % et généralement entre 20 et 50 %.

Le produit obtenu après filtration et lavage, est ensuite séché à l'air ou sous pression réduite de l'ordre de $10^{-2}$ à 100 mm de mercure ($1,33$ à $1,33.10^4$ Pa). La température de séchage peut varier entre 90°C et 200°C et le temps de séchage n'est pas critique et peut être compris entre 10 et 48 heures.

Selon la dernière étape du procédé de l'invention, on calcine le produit seché à une température qui est de préférence choisie comme étant la température moyenne d'utilisation de l'oxyde cérique en tant que catalyseur.

La température de calcination est choisie entre 300°C et 600°C mais de préférence, entre 350°C et 450°C. Elle dure environ 30 minutes à 10 heures.

La borne inférieure définissant la gamme de température n'est pas critique et peut être abaissée

Par contre, il n'y a pas intérêt à élever la limite supérieure de la température de calcination car l'on constate une chute de la surface spécifique de l'oxyde cérique obtenu. Par ailleurs, on précisera que l'oxyde cérique obtenu présente un maximum de surface spécifique de l'ordre de 100 à 130 m²/g après calcination à une température de 400°C à 450°C.

3

**0 153 227**

On recueille, après la calcination, l'oxyde cérique avec un très bon rendement puisqu'il représente lorsqu'il est exprimé en cérium IV de 85 à 95 % du cérium IV présent dans la solution de sel de cérium IV de départ.

Par ailleurs, il est à noter que le procédé de l'invention se prête tout-à-fait bien à sa mise en oeuvre en continu.

Le procédé de l'invention peut être mis en oeuvre dans un appareillage classique. L'étape de précipitation de l'hydrate d'oxyde cérique s'effectue dans un réacteur équipé d'un dispositif de chauffage thermorégulé, des moyens usuels de contrôle de réaction (thermomètre), des moyens d'agitation (agitation à ancre ou à hélice), des moyens d'introduction des réactifs.

Ensuite, la filtration de la suspension obtenue peut être réalisée sur un filtre sous pression de gaz inerte tel que l'azote, sur un filtre sous pression réduite (Büchner, Nutche) ou bien sur un dispositif continu de filtration, par exemple, un filtre rotatif type Vernay ou un filtre à bande.

Le précipité est placé dans des nacelles en silice, porcelaine ou alumine puis soumis à l'opération de séchage qui peut être réalisée dans un dispositif quelconque de séchage, par exemple, dans une étuve ventilée ou maintenue sous pression réduite.

Il est ensuite soumis au traitement de calcination qui peut être effectué dans un four à chambre, tunnel, à moufles ou rotatif équipé d'un dispositif permettant de réguler la température au cours du traitement thermique.

Les applications de l'oxyde cérique obtenu selon le procédé de l'invention sont très nombreuses. On peut citer notamment les applications en tant que charge, liant, washcoat, épaississant, dispersant, renforçateur, pigment, adsorbant et matière première pour la fabrication de céramiques et de compositions de polissage du verre.

L'oxyde cérique selon l'invention présente une grande surface spécifique si bien qu'il est bien adapté pour être utilisé dans le domaine de la catalyse, comme catalyseur ou comme support catalytique.

Compte-tenu du fait que ladite surface spécifique évolue peu sous l'effet d'une brusque élévation de température il assure une bonne durée de vie au catalyseur.

Il peut être employé comme catalyseur ou support de catalyseur pour effectuer diverses réactions telles que, par exemple: la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion.

L'oxyde cérique de l'invention peut etre utilisé seul ou en mélange avec d'autres oxydes.

En raison de sa grande réactivité chimique, il peut être utilisé avantageusement pour l'élaboration de supports mixtes de catalyseurs, par exemple, $Al_2O_3$- MgO- $CeO_2$ (cf. demande de brevet japonaise n° 78/40 077).

On donne ci-après des exemples qui illustrent l'invention sans toutefois la limiter.

**EXEMPLE 1 -**

Dans un ballon tricol de 6 litres muni d'un thermomètre, d'un dispositif d'agitation, d'un système d'introduction de réactif (pompe doseuse), d'un réfrigérant ascendant et équipé également d'un dispositif de chauffage, on introduit 4265 $cm^3$ d'eau permutée que l'on porte à ébullition.

On introduit à raison de 900 $cm^3$/h, 2735 $cm^3$ d'une solution de nitrate cérique contenant 1,19 M/l de cérium IV, 0,05 M/l de cérium III: ladite solution présente une acidité libre égale à 0,5 N et une pureté exprimée en $CeO_2$ supérieure à 99 %.

On obtient une solution ayant une concentration finale équivalente en cérium IV égale à 0,465 M/l.

On maintient la masse réactionnelle au reflux pendant 3 heures.

On effectue la filtration sur verre fritté (porosité n° 3).

On récupère 608 g d'un précipité d'hydrate d'oxyde cérique $CeO_2$, 2 $H_2O$ ce qui fait un rendement en $Ce^{IV}$ exprimé par rapport au $Ce^{IV}$ contenu dans le nitrate cérique de 90 %.

On effectue successivement 3 lavages à l'éthanol (à raison de 1 000 $cm^3$ d'éthanol pour 608 g de précipité): le précipité étant recueilli par centrifugation.

On sèche le précipité lavé dans une étuve pendant 48 heures à 105°C.

On met le précipité dans une nacelle en alumine et on le calcine ensuite dans un tour à moufles durant 6 heures à 450°C.

L'oxyde cérique obtenu présente les propriétés physico-chimiques suivantes:

1. Sa pureté est très bonne puisqu'il ne contient que 0,27 % en poids d'ions nitrate adsorbés.

2. On caractérise la structure cristalline de l'oxyde cérique obtenu selon la méthode Debye-Scherrer en transmission: rayonnement monochromatique du molybdène ou du cuivre.

L'oxyde cérique préparé selon l'invention présente une structure type fluorine c'est-à-dire cubique face centrée.

Le paramètre et l'intensité de la structure type $CaF_2$ sont les suivants:

4

- paramètre de maille      $a = 5,42 \pm 0,01$ Å

- taux de cristallisation      $t = 68\,\%$

Le paramètre de maille de l'oxyde de cérique pur est de 5,411 Å (JCPDS 4 0593)

On note donc que le paramètre de maille est légèrement dilaté.

3. Il présente une surface spécifique de 105 m2/g.

4. Son analyse granulométrique met en évidence une répartition granulométrique resserrée.

On prépare une suspension de 2 à 3 g/l de $CeO_2$ et l'on effectue l'analyse granulométrique à l'aide de l'instrument SEDIGRAPH 5000 D.

Cet appareil mesure le taux de sédimention des particules en suspension et présente automatiquement ces résultats en une distribution en pourcentages cumulatifs en fonction des diamètres équivalents sphériques (basée sur la loi de Stokes).

L'appareil détermine, par le truchement d'un faisceau de rayons X très fin, la concentration en particules retenues en supension à différentes hauteurs de sédimentation, comme une fonction du temps. Le logarithme de l'intensité du rayon X est électroniquement généré et enregistré puis présenté linéairement en "pourcentages cumulatifs" (en plus petits que) sur l'axe Y d'un enregistreur XY. Pour limiter le temps requis par l'analyse, la cellule de sédimentation est continuellement en mouvement de sorte que la profondeur de la cellule de sédimentation est inversement proportionnelle au temps. Le mouvement de la cellule est synchronisé avec l'axe des X de l'enregistreur, pour indiquer directement le diamètre équivalent sphérique correspondant au temps écoulé à une profondeur de sédimentation donnée, l'information de la dimension est présentée sur une feuille logarithmique à 3 modules.

Les pourcentages cumulatifs obtenus en fonction des diamètres des agrégats sont les suivants:

- $d_{50} = 1,1$ μm
- $d_{16} = 0,51$ μm
- $d_{84} = 1,7$ μm

Les écarts-types $e_1$ et $e_2$ sont:

$e_1$ qui est le rapport de $\frac{d_{84}}{d_{50}}$ est égla à 1,5

$e_2$ qui est le rapport de $\frac{d_{50}}{d_{16}}$ est égla 2,11

## EXEMPLE 2 -

On reproduit l'exemple 1 à la différence près que l'on introduit dans 1 155 cm3 d'eau et 105,5 cm3 d'acide nitrique concentré ($\cong$ 14,5 N) portés au reflux, 740 cm3 d'une solution de nitrate cérique contenant 1,25 M/l de cérium IV, 0,04 M/l de cérium III et ayant une acidité libre égale à 0,63 N: l'acidité libre du milieu réactionnel est d'environ 1 N.

L'addition de ladite solution de nitrate cérique est faite à raison de 246 cm3/h.

On maintient la masse réactionnelle au reflux pendant 3 heures.

On effectue la filtration ce qui permet de récupérer 33 g d'hydrate d'oxyde cérique ce qui représente un rendement en $Ce^{IV}$ de 17 %.

On effectue les lavages et le séchage comme dans l'exemple 1.

On calcine le précipité obtenu, 6 heures à 400°C.

On obtient un oxyde cérique présentant une surface spécifique de 105 m2/g.

## EXEMPLES 3 A 10 -

Dans cette série d'exemples, on met en évidence l'influence de la température de calcination sur la surface spécifique de l'oxyde cérique obtenu.

Chaque essai est conduit conformément au mode opératoire de l'exemple 2 mais en faisant varier chaque fois, la température de calcination.

Les résultats obtenus sont les suivants:

| Exemple | 3 | 4 | 5 | 2 | 6 | 7 | 8 | 9 | 10 |
|---|---|---|---|---|---|---|---|---|---|
| température de calcination | 250 | 300 | 350 | 400 | 450 | 500 | 600 | 700 | 800 |
| surface spécifique de $CeO_2$ | 50 | 90 | 105 | 110 | 105 | 105 | 90 | 50 | 10 |

On note que la plus grande surface spécifique est obtenue après calcination de l'hydrate d'oxyde cérique vers 400°C.


**Revendications**

1. Procédé d'obtention d'oxyde cérique présentant une surface spécifique déterminée selon la méthode BET d'au moins 85 ± 5 m2/g caractérisé par le fait qu'il consiste à hydrolyser une solution aqueuse d'un sel de cérium IV en milieu acide, à filtrer le précipité obtenu, à le laver à l'aide d'un solvant organique, éventuellement à le sécher, puis à le calciner à une température comprise entre 300 et 6000°C.

2. Procédé selon la revendication 1 caractérisé par le fait que la solution aqueuse de sel de cérium IV est une solution aqueuse de nitrate cérique ou une solution aqueuse de nitrate cérique d'ammonium.

3. Procédé selon l'une des revendications 1 et 2 caractérisé par le fait que la concentration de la solution de sel de cérium exprimée en cérium IV est comprise entre 0,3 et 2 moles par litre.

4. Procédé selon l'une des revendications 1 à 3 caractérisé par le fait que le milieu d'hydrolyse est de l'eau distillée ou permutée.

5. Procédé selon l'une des revendications 1 à 4 caractérisé par le fait que le milieu d'hydrolyse présente une acidité allant de $10^{-2}$ N jusqu'à 1,0 N.

6. Procédé selon la revendication 5 caractérisé par le fait que l'acidité peut être apportée par le début de la réaction d'hydrolyse.

7. Procédé selon la revendication 5 caractérisé par le fait que l'acidité est apportée par de l'acide nitrique.

8. Procédé selon là revendication 5 caractérisé par le fait que l'acidité est apportée par une solution de nitrate cérique ayant une acidité de 0,3 N à 5 N.

9. Procédé selon la revendication 8 caractérisé pair le fait que la solution de nitrate cérique a une acidité de 0,3 N à 1 N.

10. Procédé selon l'une des revendications 1 à 9 caractérisé par le fait que la proportion entre la solution aqueuse de sel de cérium IV et le milieu d'hydrolyse est telle que la concentration finale équivalente en cérium IV est comprise entre 0,2 et 0,8 mole/ litre.

11. Procédé selon l'une des revendications 1 à 10 caractérisé par le fait que la température du milieu réactionnel est comprise entre 70°C et 100°C environ.

12. Procédé selon la revendication 11 caractérisé par le fait que la température du milieu réactionnel est la température de son reflux.

13. Procédé selon l'une des revendications 11 et 12 caractérisé par le fait que l'on porte le milieu d'hydrolyse à la température réactionnelle et que l'on introduit graduellement ou en continu la solution de sel de cérium IV.

14. Procédé selon la revendication 13 caractérisé par le fait que la durée d'addition de la solution de sel de cérium IV est comprise entre 1 heure et 4 heures.

15. Procédé selon l'une des revendications 11 et 12 caractérisé par le fait que l'on maintient le chauffage pendant 1 à 24 heures après la fin de l'addition de la solution de sel de cérium IV.

16. Procédé selon la revendication 15 caractérisé par le fait que l'on maintient le chauffage pendant 2 à 8 heures.

17. Procédé selon l'une des revendications 1 à 16 caractérisé par le fait que l'on effectue la filtration du précipité avant ou après refroidissement de la masse réactionnelle.

18. Procédé selon l'une des revendications 1 à 17 caractérisé par le fait que l'on effectue un à trois lavages du précipité à l'aide d'un solvant organique.

19. Procédé selon la revendication 18 caractérisé par le fait que le solvant organique est l'éthanol, l'isopropanol.

20. Procédé selon l'une des revendications 1 à 19 caractérisé par le fait que l'on effectue l'étape de séchage à l'air ou sous pression réduite de l'ordre de $10^{-2}$ à 100 mm de mercure (1,33 à $1,33.10^4$ Pa), à une température comprise entre 90°C et 200°C pendant une durée comprise entre 10 et 48 heures.

21. Procédé selon l'une des revendications 1 à 20 caractérisé par le fait que l'on effectue l'étape de calcination pendant une durée d'environ 30 minutes à 10 heures.

22. Procédé selon la revendication 21 caractérisé par le fait que la température de calcination est comprise entre 350°C et 450°C.

23. Oxyde cérique caractérisé par le fait qu'il présente une surface spécifique déterminée selon la méthode BET d'au moins 100 m$^2$/g après calcination à une température comprise entre 400°C et 450°C.

24. Oxyde cérique selon la revendication 23 caractérisé par le fait qu'il présente une surface spécifique de 100 à 130 m$^2$/g aprés calcination à une température comprise entre 400°C et 450°C.

25. Oxyde cérique selon l'une des revendication 23 et 24 caractérisé par le fait que sa surface spécifique décroit au plus de 30 m$^2$/g lorsqu'il est soumis à une élévation de température de 400°C à 600°C.

26. Oxyde cérique selon l'une des revendications 23 à 25 caractérisé par le fait qu'il présente une répartition granulométrique fine et resserrée avec un diamètre moyen variant de 0,5 à 1,5 μm et des écarts-types $e_1$ et $e_2$ compris dans un intervalle allant de 1,0 à 2,5.


## Patentansprüche

1. Verfahren zur Darstellung von Ceroxid mit einer nach der BET-Methode bestimmten spezifischen Oberfläche von mindestens 85 ± 5 m$^2$/g, dadurch gekennzeichnet, daß eine wässrige Lösung eines Cer(IV)-Salzes in saurem Milieu hydrolisiert, der erhaltene Niederschlag filtriert, mittels eines organischen Lösungsmittels gewaschen und eventuell getrocknet und dann bei einer Temperatur zwischen 300 und 600°C kalziniert wird.

2. Verfahren nach Patentanspruch 1, dadurch gekennzeichnet, daß die wässrige Cer(IV)-Salzlösung eine wässrige Cernitratlösung oder eine wässrige Cerammoniumnitratlösung ist.

3. Verfahren nach einem der Patentansprüche 1 und 2, dadurch gekennzeichnet, daß die Konzentration der Cersalzlösung zwischen 0,3 und 2 Mol Cer(IV) pro Liter beträgt.

4. Verfahren nach einem der Patentansprüche 1 bis 3, dadurch gekennzeichnet, daß das Hydrolysemilieu destilliertes oder deionisiertes Wasser ist.

5. Verfahren nach einem der Patentansprüche 1 bis 4, dadurch gekennzeichnet, daß die Säurestärke des Hydrolysemilieus zwischen 10$^{-2}$ N und 1,0 N liegt.

6. Verfahren nach Patentanspruch 5, dadurch gekennzeichnet, daß der saure Charakter durch den Anfang der Hydrolysereaktion herbeigeführt werden kann.

7. Verfahren nach Patentanspruch 5, dadurch gekennzeichnet, daß der saure Charakter durch Salpetersäure herbeigeführt wird.

8. Verfahren nach Patentanspruch 5, dadurch gekennzeichnet, daß der saure Charakter durch eine Cernitratlösung mit einer Säurestärke von 0,3 N bis 5 N herbeigeführt wird.

9. Verfahren nach Patentanspruch 8, dadurch gekennzeichnet, daß die Cernitratlöung eine Säurestärke von 0,3 N bis 1 N aufweist.

10. Verfahren nach einem der Patentansprüche 1 bis 9, dadurch gekennzeichnet, daß das Verhältnis zwischen der wässrigen Cer(IV)-Salzlösung und dem Hydrolysemilieu derart ist, daß die resultierende, dementsprechende Konzentration des Cer(IV) zwischen 0,2 und 0,8 Mol/Liter beträgt.

11. Verfahren nach einem der Patentansprüche 1 bis 10, dadurch gekennzeichnet, daß die Temperatur des Reaktionsgemisches ungefähr zwischen 70°C und 100°C liegt.

12. Verfahren nach Patentanspruch 11, dadurch gekennzeichnet, daß die Temperatur des Reaktionsgemisches die Temperatur seines Rückflusses ist.

13. Verfahren nach einem der Patentansprüche 11 und 12, dadurch gekennzeichnet, daß das Hydrolysemilieu auf die Reaktionstemperatur gebracht wird und schrittweise oder kontinuierlich die Cer(IV)-Salzlösung hinzugefügt wird.

14. Verfahren nach Patentanspruch 13, dadurch gekennzeichnet, daß das Hinzufügen der Cer(IV)-Salzlösung über einen Zeitraum von 1 bis 4 Stunden erfolgt.

15. Verfahren nach einem der Patentansprüche 11 und 12, dadurch gekennzeichnet, daß die Beheizung während 1 bis 24 Stunden nach der Beendigung des Hinzufügens der Cer(IV)-Salzlösung aufrechterhalten wird.

16. Verfahren nach Patentanspruch 15, dadurch gekennzeichnet, daß die Beheizung während 2 bis 8 Stunden aufrechterhalten wird.

17. Verfahren nach einem der Patentansprüche 1 bis 16, dadurch gekennzeichnet, daß die Filtration des Niederschlags vor oder nach Abkühlung des Reaktionsgemisches erfolgt.

18. Verfahren nach einem der Patentansprüche 1 bis 17, dadurch gekennzeichnet, daß der Niederschlag einbis dreimal mittels eines organischen Lösungsmittels gewaschen wird.

19. Verfahren nach Patentanspruch 18, dadurch gekennzeichnet, daß das organische Lösungsmittel Ethanol oder Isopropanol ist.

20. Verfahren nach einem der Patentansprüche 1 bis 19, dadurch gekennzeichnet, daß die Trocknung an der Luft oder bei vermindertem Druck in der Größenordnung von 10$^{-2}$ bis 100 mm Quecksilbersäule (1,33 bis 1,33·10$^4$ Pa) und bei einer Temperatur zwischen 90°C und 200°C während 10 bis 48 Stunden ausgeführt wird.

21. Verfahren nach einem der Patentansprüche 1 bis 20, dadurch gekennzeichnet, daß das Kalzinieren während ungefähr 30 Minuten bis 10 Stunden erfolgt.

22. Verfahren nach Patentanspruch 21, dadurch gekennzeichnet, daß die Temperatur der Kalzinierung zwischen 350°C und 450°C liegt.

23. Ceroxid, dadurch gekennzeichnet, daß es eine nach BET-Methode bestimmte spezifische Oberfläche von mindestens 100 m$^2$/g nach einer Kalzinierung bei einer Temperatur zwischen 400°C und 450°C aufweist.

24. Ceroxid nach Patentanspruch 23, dadurch gekennzeichnet, daß es eine spezifische Oberfläche von 100 bis 130 m$^2$/g nach einer Kalzinierung bei einer Temperatur zwischen 400°C und 450°C aufweist.

25. Ceroxid nach einem der Patentansprüche 23 und 24, dadurch gekennzeichnet, daß sich seine spezifische Oberfläche höchstens um 30 m$^2$/g verringert, wenn es einer Temperaturerhöhung von 400°C auf 600°C ausgesetzt wird.

26. Ceroxid nach einem der Patentansprüche 23 bis 25, dadurch gekennzeichnet, daß es eine feine und geschlossene Korngrößenverteilung aufweist, bei der der mittlere Durchmesser zwischen 0,5 und 1,5 μm und die Standardabweichungen e$_1$ und e$_2$ innerhalb eines Intervalls von 1,0 bis 2,5 liegen.

**Claims**

1. Process for the production of ceric oxide having a specific surface area, determined according to the BET method, of at least 85 ± 5 m$^2$/g, characterized in that it consists in hydrolysing an aqueous cerium IV salt solution in an acid medium, in filtering the precipitate obtained, in washing it with an organic solvent, optionally in drying it, and then in calcining it at a temperature of between 300 and 600°C.

2. Process according to Claim 1, characterized in that the aqueous cerium IV salt solution is an aqueous ceric nitrate solution or an aqueous ceric ammonium nitrate solution.

3. Process according to one of Claims 1 and 2, characterized in that the concentration of the cerium salt solution, expressed as cerium IV, is between 0.3 and 2 moles per litre.

4. Process according to one of Claims 1 to 3, characterized in that the hydrolysis medium is distilled or deionized water.

5. Process according to one of Claims 1 to 4, characterized in that the hydrolysis medium has an acidity ranging from 10$^{-2}$ N to 1.0 N.

6. Process according to Claim 5, characterized in that the acidity may be supplied by the beginning of the hydrolysis reaction.

7. Process according to Claim 5, characterized in that the acidity is supplied by nitric acid.

8. Process according to Claim 5, characterized in that the acidity is supplied by a ceric nitrate solution having an acidity of 0.3 N to 5 N.

9. Process according to Claim 8, characterized in that the ceric nitrate solution has an acidity of 0.3 N to 1 N.

10. Process according to one of Claims 1 to 9, characterized in that the proportion between the aqueous cerium IV salt solution and the hydrolysis medium is such that the equivalent final concentration of cerium IV is between 0.2 and 0.8 mol/litre.

11. Process according to one of Claims 1 to 10, characterized in that the temperature of the reaction medium is approximately between 70°C and 100°C.

12. Process according to Claim 11, characterized in that the temperature of the reaction medium is its reflux temperature.

13. Process according to one of Claims 11 and 12, characterized in that the hydrolysis medium is heated to the reaction temperature and that the cerium IV salt solution is introduced gradually or continuously.

14. Process according to Claim 13, characterized in that the period over which the cerium IV salt solution is added is between 1 hour and 4 hours.

15. Process according to one of Claims 11 and 12, characterized in that the heating is maintained for 1 to 24 hours after the completion of addition of the cerium IV salt solution.

16. Process according to Claim 15, characterized in that the heating is maintained for 2 to 8 hours.

17. Process according to one of Claims 1 to 16, characterized in that the precipitate is filtered before or after cooling the reaction mass.

18. Process according to one of claims 1 to 17, characterized in that one to three washings of the precipitate are carried out with an organic solvent.

19. Process according to Claim 18, characterized in that the organic solvent is ethanol or isopropanol.

20. Process according to one of claims 1 to 19, characterized in that the drying stage is carried out in air or under reduced pressure of the order of 10$^{-2}$ to 100 mm of mercury (1.33 to 1.33 x 10$^4$Pa), at a temperature of between 90°C and 200°C for a period of between 10 and 48 hours.

21. Process according to one of Claims 1 to 20, characterized in that the calcination stage is carried out for a period of approximately 30 minutes to 10 hours.

22. Process according to Claim 21, characterized in that the calcination temperature is between 350°C and 450°C.

23. Ceric oxide characterized in that it has a specific surface area, determined according to the BET method, of at least 100 m$^2$/g after calcination at a temperature of between 400°C and 450°C.

24. Ceric oxide according to Claim 23, characterized in that it has a specific surface area of 100 to 130 m$^2$/g after calcination at a temperature of between 400°C and 450°C.

25. Ceric oxide according to one of Claims 23 and 24, chararacterised in that its specific surface area decreases by not more than 30 m$^2$/g when it is subjected to an increase in temperature from 400°C to 600°C.

26. Ceric oxide according to one of Claims 23 to 25, characterized in that it has a fine and narrow particle size distribution, with a mean diameter ranging from 0.5 to 1.5 μm and standard deviations $e_1$ and $e_2$ within a range from 1.0 to 2.5.

Figure 1

10 µm

Figure 2

1 µm